# EUROPÄISCHE PATENTSCHRIFT

(11) **EP 0 712 907 B1**
(45) Veröffentlichungstag und Bekanntmachung des Hinweises auf die Patenterteilung: **24.05.2000**
(21) Anmeldenummer: 94118191.9
(22) Anmeldetag: 18.11.1994
(51) Int. Cl.: C09B 62/517

(54) **Wasserlösliche Phthalocyaninfarbstoffe, Verfahren zu ihrer Herstellung und ihre Verwendung**
Water-soluble phthalocyanine dyes, process for their manufacture and use thereof
Colorants phtalocyanines solubles dans l'eau, procédé pour leur fabrication et leur utilisation

(43) Veröffentlichungstag der Anmeldung: 22.05.1996
(73) Patentinhaber: DyStar Textilfarben GmbH & Co. Deutschland KG, 60318 Frankfurt am Main (DE)
(72) Erfinder: Saitmacher, Klaus, Dr., D-65830 Kriftel (DE); Vermehren, Petra, Dr., D-65510 Idstein (DE); Beck, Thomas, Dr., D-65510 Idstein (DE)

(56) Entgegenhaltungen:
- FR-A- 2 427 365
- GB-A- 931 596

## Beschreibung

Die Erfindung liegt auf dem technischen Gebiet der faserreaktiven Farbstoffe.

Die Praxis des Färbens mit faserreaktiven Farbstoffen stellt zunehmend erhöhte Anforderungen an die Qualität der Färbungen und die ökologische Verträglichkeit der Farbstoffe und des Färbeprozesses. Infolgedessen besteht weiterhin insbesondere im Hinblick auf die ökologische Unbedenklichkeit der Verwendung der Farbstoffe der Bedarf nach neuen, insbesondere schwermetallfreien faserreaktiven Farbstoffen, die zudem gute färberische Qualitäten und Echtheitseigenschaften besitzen. Beispielsweise sind in den U.S.-Patentschriften Nrs. 4 237 050, 4 350 632 und 4 745 187 faserreaktive Schwermetallkomplex-Phthalocyaninfarbstoffe, wie insbesondere Kupfer- und Nickelphthalocyaninfarbstoffe, mit guten färberischen Eigenschaften beschrieben, die, über einen N-Arylsulfonamid- oder N-Alkylsulfonamid-Rest gebunden, eine faserreaktive Gruppe der Vinylsulfonreihe besitzen. Beim Zerfall dieser Schwermetallkomplex-Phthalocyaninfarbstoffe, beispielsweise beim Entsorgen von Färbereiabwässern und bei gebrauchten Textilien, werden deren Schwermetalle in die Umgebung freigesetzt, so daß die Schwermetalle in die Abwässer und Klärschlämme gelangen. Für die Einschränkung der Belastung von Abwässern und Klärschlämmen durch Schwermetallionen bestehen bereits umfangreiche gesetzliche Regelungen, so daß ein Weg gesucht werden mußte, die bisher bekannten Schwermetall-Phthalocyaninfarbstoffe durch andere, insbesondere solche ohne Schwermetallionenanteil, zu ersetzen.

Mit der vorliegenden Erfindung wurden nunmehr neue, wasserlösliche Phthalocyaninfarbstoffe der nachstehend angegebenen allgemeinen Formel (1) gefunden, deren Metallzentralatom diesbezüglich unbedenklich ist und mit denen qualitativ hochwertige Färbungen in brillanten grünen bis grünstichig türkisfarbenen Tönen mit guten Echtheiten erhalten werden.

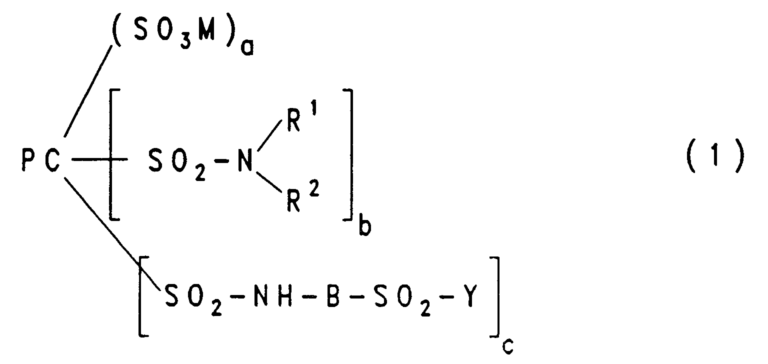

In dieser Formel bedeuten:
- PC: ist der Rest des Phthalocyanins der allgemeinen Formel (A) 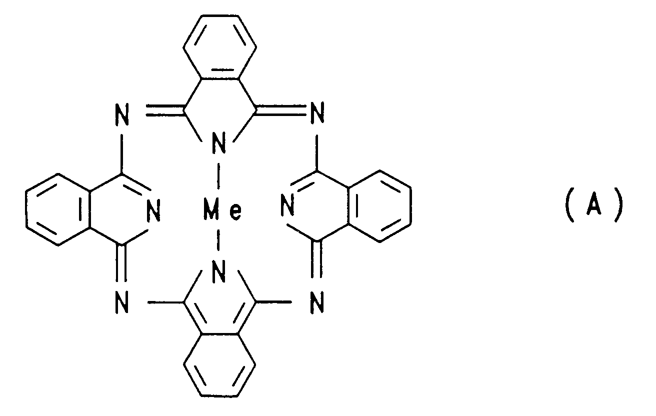 in welcher
- Me: der bivalente Metallrest
-Zn(II)-, 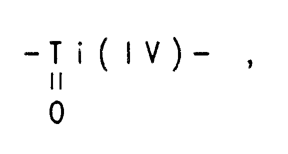 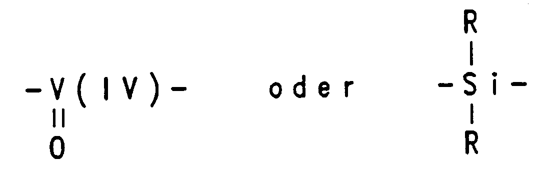 mit R gleich Methyl, Ethyl, Hydroxy oder Halogen, wie bevorzugt Chlor, ist;
- M: ist Wasserstoff oder ein Alkalimetall, wie Natrium, Kalium oder Lithium, oder ein anderes salzbildendes Metall;
- R¹: ist Wasserstoff, Alkyl von 1 bis 6 C-Atomen, bevorzugt von 1 bis 4 C-Atomen, wie Methyl und Ethyl, oder ist Alkyl von 2 bis 6 C-Atomen, bevorzugt von 2 bis 4 C-Atomen, wie Ethyl und n-Propyl, das durch Alkoxy von 1 bis 4 C-Atomen, wie Methoxy und Ethoxy, Alkanoylamino von 2 bis 5 C-Atomen, wie Acetylamino und Propionylamino, Carboxy, Sulfo, Phosphato, Sulfato, Hydroxy oder Dialkylamino mit jeweils einem Alkyl von 1 bis 4 C-Atomen, wie Dimethylamino und Diethylamino, substituiert ist,
- R²: ist Wasserstoff, Alkyl von 1 bis 6 C-Atomen, bevorzugt von 1 bis 4 C-Atomen, wie Methyl und Ethyl, oder ist Alkyl von 2 bis 6 C-Atomen, bevorzugt von 2 bis 4 C-Atomen, wie Ethyl und n-Propyl, das durch Alkoxy von 1 bis 4 C-Atomen, wie Methoxy und Ethoxy, Alkanoylamino von 2 bis 5 C-Atomen, wie Acetylamino und Propionylamino, Carboxy, Sulfo, Phosphato, Sulfato, Hydroxy, Phenyl, Sulfophenyl, Carboxyphenyl oder Dialkylamino mit jeweils einem Alkyl von 1 bis 4 C-Atomen, wie Dimethylamino und Diethylamino, substituiert ist, oder ist Phenyl, das durch Sulfo substituiert sein kann, oder
- R¹ und R²: bilden gemeinsam mit dem Stickstoffatom und einem Alkylen von 3 bis 8 C-Atomen, bevorzugt von 4 bis 6 C-Atomen, oder mit einer weiteren Heterogruppe, wie einem Stickstoffatom oder Sauerstoffatom oder einer Gruppe -NH-, und zwei Alkylenen von 1 bis 5 C-Atomen den Rest eines 4- bis 8-gliedrigen heterocyclischen Rings, wie beispielsweise den N-Piperidino-, N-Piperazino- oder N-Morpholino-Rest, oder
der Rest -NR¹R² ist Cyanoamino;
- B: ist ein Rest der allgemeinen Formel (2a) oder (2b) 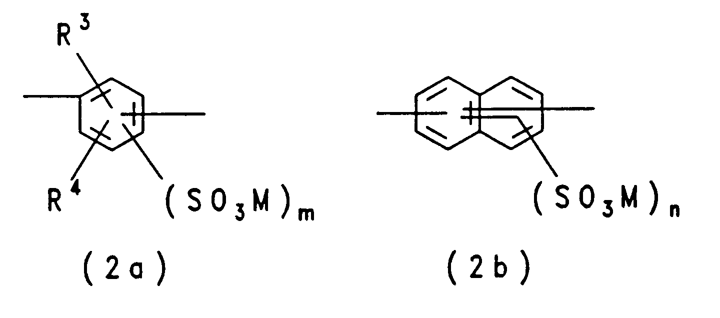 in welchen
- R³: Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, ist,
- R⁴: Wasserstoff, Halogen, wie Brom und Chlor, Alkyl von 1 bis 4 C-Atomen, wie Ethyl und insbesondere Methyl, oder Alkoxy von 1 bis 4 C-Atomen, wie Ethoxy und insbesondere Methoxy, ist,
- M: die obengenannte Bedeutung besitzt,
- m: für Zahl Null oder 1 steht (wobei im Falle von m gleich Null diese Gruppe für Wasserstoff steht), bevorzugt Null ist,
- n: die Zahl Null, 1 oder 2, bevorzugt 1 oder 2, bedeutet, und in Formel (2a) die Gruppe -SO₂-Y bevorzugt in meta- oder para-Stellung zur Sulfonylaminogruppe gebunden ist und in Formel (2b) die Bindung vom Naphthalinrest zur Sulfonylaminogruppe bevorzugt in β-Stellung des Naphthalinrestes steht;
- Y: ist Vinyl oder ist Ethyl, das in β-Stellung einen Substituenten enthält, der durch Alkali unter Bildung der Vinylgruppe eliminierbar ist, oder ist β-Sulfoethyl oder β-Hydroxyethyl;
- a: ist eine Zahl von Null bis 3,
- b: ist eine Zahl von Null bis 2 und
- c: ist eine Zahl von 1 bis 4,
wobei die Summe von (a+b+c) gleich 1 bis 4 beträgt.

Die einzelnen Formelglieder können im Rahmen ihrer Bedeutung zueinander gleiche oder voneinander verschiedene Bedeutungen besitzen.

Die erfindungsgemäßen Phthalocyaninfarbstoffe werden in der Regel in Form von Gemischen der Einzelverbindungen der allgemeinen Formel (1) erhalten, wobei sich diese Einzelverbindungen voneinander durch den Substitutionsgrad der Sulfo- und Sulfonamidgruppen an dem Phthalocyaninrest unterscheiden. Die Formeln der erfindungsgemäßen Phthalocyaninfarbstoffe haben deshalb Indices, die in der Regel gebrochene Zahlen sind.

Alkalisch eliminierbare Substituenten, die in β-Stellung der Ethylgruppe von Y stehen, sind beispielsweise Halogenatome, wie Brom und Chlor, Estergruppen organischer Carbon- und Sulfonsäuren, wie von Alkylcarbonsäuren, gegebenenfalls substituierter Benzolcarbonsäuren und gegebenenfalls substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino. Bevorzugt ist Y β-Sulfatoethyl oder Vinyl und insbesondere bevorzugt β-Sulfatoethyl.

Die Gruppen "Sulfo", "Carboxy", "Thiosulfato", "Phosphato" und "Sulfato" schließen sowohl deren Säureform als auch deren Salzform ein. Demgemäß bedeuten Sulfogruppen Gruppen entsprechend der allgemeinen Formel -SO₃M, Carboxygruppen Gruppen entsprechend der allgemeinen Formel -COOM, Thiosulfatogruppen Gruppen entsprechend der allgemeinen Formel -S-SO₃M, Phosphatogruppen Gruppen entsprechend der allgemeinen Formel -OPO₃M₂ und Sulfatogruppen Gruppen entsprechend der allgemeinen Formel -OSO₃M, in welchen M die obengenannte Bedeutung besitzt.

Formelreste der allgemeinen Formel -B-SO₂-Y sind beispielsweise: 2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-3-(β-sulfatoethylsulfonyl)-phenyl, 2-Chlor-4-(β-sulfatoethylsulfonyl)-phenyl, 2-Brom-4-(β-sulfatoethylsulfonyl)-phenyl, 4-Methoxy-3-(β-sulfatoethylsulfonyl)-phenyl, 4-Chlor-3-(β-sulfatoethylsulfonyl)-phenyl, 2-Ethoxy-4- oder -5-(β-sulfatoethylsulfonyl)-phenyl, 2-Methyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2-Sulfo-4-vinylsulfonyl-phenyl, 2-Chlor-4- oder -5-(β-chlorethylsulfonyl)-phenyl, 3- oder 4-(β-Acetoxyethylsulfonyl)-phenyl, 5-(β-Sulfatoethylsulfonyl)-naphth-2-yl, 6- oder 7- oder 8-(β-Sulfatoethylsulfonyl)-naphth-2-yl, 6-(β-Sufatoethylsulfonyl)-1-sulfo-naphth-2-yl, 5-(β-Sulfatoethylsulfonyl)-1-sulfo-naphth-2-yl und 8-(β-Sulfatoethylsulfonyl)-6-sulfo-naphth-2-yl.

Bevorzugt in den Phthalocyaninfarbstoffen der allgemeinen Formel (1) ist R³ gleich Wasserstoff, Methyl oder Methoxy, und bevorzugt ist R⁴ gleich Wasserstoff oder Methoxy. Bevorzugt sind weiterhin Verbindungen der allgemeinen Formel (1), in welchen R¹ und R² unabhängig voneinander jedes Wasserstoff, Methyl oder Ethyl bedeutet, wobei b gleich 1 bis 2 ist, desweiteren solche, in welchen der Index b gleich Null ist. Bevorzugt sind weiterhin Phthalocyaninfarbstoffe der allgemeinen Formel (1), in welchen a eine Zahl von Null bis 3, bevorzugt von 1 bis 2,5, ist, b gleich Null bis 2, bevorzugt Null, ist und c gleich eine Zahl von 1 bis 4, bevorzugt von 1 bis 2, ist.

Reste der allgemeinen Formel -NR¹R² sind beispielsweise Amino, Methylamino, Ethylamino, Butylamino, Benzylamino, β-Hydroxy-ethylamino, Dimethylamino, Diethylamino, Di-(isopropyl)-amino, N-Methyl-benzylamino, N-Piperidino, N-Morpholino, Di-(β-hydroxyethyl)-amino, β-Sulfo-ethylamino, β-Carboxy-ethylamino, β-(4-Carboxy-phenyl)-ethylamino, Phenylamino, N-Methyl-phenylamino, 3-Sulfo-phenylamino, 4-Sulfo-phenylamino und Cyanoamino.

Die vorliegende Erfindung betrifft weiterhin ein Verfahren zur Herstellung der Phthalocyaninverbindungen der allgemeinen Formel (1), das dadurch gekennzeichnet ist, daß man ein Phthalocyaninsulfonsäurechlorid der allgemeinen Formel (3) 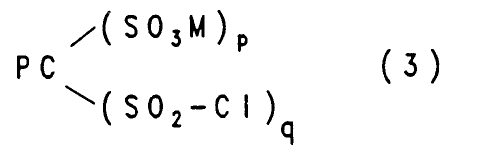 in welcher PC und M die obengenannte Bedeutung besitzt, p eine Zahl von Null bis 3 bedeutet und q eine Zahl von 1 bis 4 ist, wobei die Summe von (p + q) gleich 1 bis 4 ist, oder ein Gemisch derselben in wäßrigem oder nicht-wäßrigem Medium mit einem Amin der allgemeinen Formel (4)

H₂N―B―SO₂―Y (4)

in welcher B und Y die obengenannte Bedeutungen haben und Y hier auch die Bedeutung von β-Hydroxyethyl haben kann, und gegebenenfalls mit einer weiteren aminogruppenhaltigen Verbindung der allgemeinen Formel H-NR¹R² mit R¹ und R² der obengenannten Bedeutung gleichzeitig oder in beliebiger Reihenfolge und unter gleichzeitiger oder nachfolgender partieller Hydrolyse der Sulfochloridgruppen zu Sulfogruppen umsetzt. Gegebenenfalls am Ende der Kondensationsreaktionen werden noch vorhandene Sulfochloridgruppen zu Sulfogruppen hydrolysiert. Bei der erfindungsgemäßen Umsetzung ist in der Regel eine partielle Hydrolyse der Sulfonsäurechloridgruppen zu Sulfogruppen unvermeidlich. Im Falle der Verwendung eines Amins der allgemeinen Formel (4) mit Y gleich β-Hydroxyethyl kann in der erhaltenen Phthalocyaninverbindung die β-Hydroxyethylsulfonyl-Gruppe analog allgemein bekannten Verfahrensweisen in eine Gruppe der Formel -SO₂-Y mit Y gleich einer in β-Stellung durch eine Estergruppe substituierten Ethylgruppe überführt werden, wie beispielsweise in die β-Sulfatoethylsulfonyl-Gruppe mittels Schwefelsäure oder schwefeltrioxidhaltiger Schwefelsäure oder Chlorsulfonsäure.

Die erfindungsgemäßen Kondensationsreaktionen zwischen den Verbindungen der allgemeinen Formel (3) und den Aminen der allgemeinen Formeln (4) und H-NR¹R² werden bei einem pH-Wert zwischen 3,5 und 8,5, vorzugsweise zwischen 4 und 8, insbesondere zwischen 5,5 und 6,5, und bei einer Temperatur zwischen 0°C und 100°C, vorzugsweise zwischen 20 und 60°C, insbesondere zwischen 45 und 55°C, durchgeführt. In der Regel erfolgen sie in Gegenwart eines Katalysators, wie Pyridin, einer Pyridinsulfonsäure-, Pyridincarbonsäure-, Pyridinsulfonamid- oder Pyridincarbonamid-Verbindung, wie bevorzugt des Nicotinsäureamids, analog den aus den anfangs erwähnten U.S.-Patentschriften oder der US-PS 4 745 187 bekannten Verfahrensweisen.

Die Ausgangs-Phthalocyaninsulfonsäurechlorid-Verbindungen der allgemeinen Formel (3) werden analog bekannten Verfahrensweisen hergestellt, wie sie beispielsweise aus Angaben in den zuvor genannten U.S.-Patentschritten sowie aus der deutschen Patentschrift Nr. 891 121 ersichtlich sind. Beispielsweise stellt man eine Verbindung der allgemeinen Formel (3) in der Weise her, daß man das Phthalocyanin der Formel (A) in Chlorsulfonsäure einträgt und den Ansatz bei einer Temperatur zwischen 80 und 150°C, bevorzugt zwischen 100 und 140°C, mehrere Stunden rührt, danach ein Chlorierungsmittel, vorzugsweise Thionylchlorid, hinzu gibt und den Ansatz mehrere Stunden bei 80 bis 90°C weiterrührt. Der Ansatz wird sodann in zerstoßenes Eis eingerührt und das ausgefällte Phthalocyaninsulfochlorid abgesaugt.
Eine andere Möglichkeit der Herstellung einer Verbindung der allgemeinen Formel (3) ist die Umsetzung des Phthalocyanins der Formel (A) mit Schwefelsäure/Schwefeltrioxid in Schwefeltrioxid enthaltender Schwefelsäure (Oleum) mit einem Schwefeltrioxidgehalt von etwa 50 bis 65 Gew.-% bei etwa 80°C. Nach dieser Umsetzung rührt man den Ansatz in eine eisgekühlte wäßrige Lösung von Natriumchlorid ein und überführt die erhaltene metallhaltige Phthalocyaninsulfonsäure nach üblichen Verfahrensweisen, beispielsweise mittels Thionylchlorid in Dimethylformamid, in das Phthalocyaninsulfonsäurechlorid.

Die Metallphthalocyanin-Ausgangsverbindungen der allgemeinen Formel (A) sind bekannt oder lassen sich analog bekannten Verfahrensweisen herstellen. Als Literatur hierüber können die US-PS 2 202 632, die schweizerische Patentschrift 280 478, die britischen Patentschriften 679 773 und 1 306 055, die deutsche Offenlegungsschrift 2 136 767, die französische Patentanmeldungs-Veröffentlichung 2 103 195 und die US-PS 2 155 038 genannt werden.

Die Abscheidung der erfindungsgemäß hergestellten Phthalocyaninfarbstoffe der allgemeinen Formel (1), nachfolgend als "Farbstoffe (1)" bezeichnet, aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann. Die Farbstoffe (1) haben faserreaktive Eigenschaften und besitzen sehr gute Farbstoffeigenschatten. Sie können deshalb zum Färben und Bedrucken von hydroxy- und/oder carbonamidgruppenhaltigem Material, insbesondere Fasermaterial, wie auch von Leder, verwendet werden. Ebenso können auch die bei der Synthese der erfindungsgemäßen Verbindungen anfallenden Lösungen, gegebenenfalls nach Zusatz einer Puffersubstanz, gegebenenfalls nach Konzentrierung, direkt als Flüssigpräparation der färberischen Verwendung zugeführt werden.

Gegenstand der vorliegenden Erfindung ist deshalb auch die Verwendung der Farbstoffe (1) zum Färben (einschließliches Bedrucken) von hydroxy- und carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern; wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide , Leder, Polyamid-6,6, Polyamid-6, Polyamid- 11 und Polyamid-4.

Die Farbstoffe (1) lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen in sehr guten Farbausbeuten und mit ausgezeichnetem Farbaufbau. Man färbt bei Temperaturen zwischen 40 und 105°C, gegebenenfalls bei Temperaturen bis zu 130°C unter Druck, gegebenenfalls in Gegenwart von üblichen Färbereihilfsmitteln, im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls Färbungen mit ausgezeichneten Farbausbeuten und sehr gutem Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls erhält man nach den üblichen Druckverfahren für Cellulosefasern, die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103°C, oder die zweiphasig durchgeführt werden können, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxyde und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe (1) mit den säurebindenden Mitteln, gegebenenfalls unter Wärmeeinwirkung, werden die Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den Farbstoffen (1) hergestellten Färbungen und Drucke auf Cellulosefasermaterialien besitzen eine hohe Farbstärke, außerdem gute Lichtechtheiten und gute Naßechtheiten, wie Wasch-, Walk-, Wasser-, Seewasser-, Überfärbe- und Schweißechtheiten, darüber hinaus eine gute Plissierechtheit, Bügelechtheit und Reibechtheit.

Die nachstehenden Beispiele dienen zur Erläuterung der Erfindung. Die formelmäßig beschriebenen Verbindungen sind in Form der freien Säure angegeben; im allgemeinen werden sie in Form ihrer Alkalimetallsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Lithium-, Natrium- oder Kaliumsalze, in die Synthese eingesetzt werden.
Die in den Beispielen genannten Teile sind Gewichtsteile; die Prozentangaben stellen Gewichtsprozente dar, sofern nicht anders vermerkt. Gewichtsteile stehen zu Volumenteilen im Verhältnis von Kilogramm zu Liter.

Die für die erfindungsgemäßen Verbindungen angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel A

25 Teile Zink(II)-Phthalocyanin werden in 120 Teile Chlorsulfonsäure eingetragen, wobei die Temperatur des Ansatzes auf 50 bis 60°C ansteigt. Man rührt noch 3 bis 4 Stunden bei 135°C weiter, kühlt den Ansatz sodann auf 80 bis 90°C und gibt langsam unter gutem Rühren 34 Vol.-Teile Thionylchlorid hinzu. Man rührt noch etwa vier Stunden bei 90°C weiter, rührt den Ansatz sodann auf Eis, saugt das ausgefallene Zink(II)-Phthalocyaninsulfochlorid mit einem durchschnittlichen Substitutionsgrad an Sulfochloridgruppen von 2,5 ab und wäscht es mit Eiswasser nach.

### Beispiel B

In ein Gemisch aus 60 Teilen 2-Cyano-benzamid, 610 Teilen Chinolin und 364 Teilen 1,2-Dichlor-benzol gibt man langsam innerhalb von etwa 5 Minuten bei einer Temperatur von etwa 20°C 68 Teile Siliciumtetrachlorid, erhitzt das Reaktionsgemisch auf 205°C und führt die Umsetzung unter Rühren unter Rückflußtemperatur während 10 Minuten weiter. Man kühlt danach den Ansatz auf 180°C und saugt bei dieser Temperatur den Rückstand ab, der in 158 Teilen Eisessig suspendiert, danach wiederum abgesaugt und anschließend mit 150 Teilen einer wäßrigen 2n-Essigsäure und 400 Volumenteilen Ethanol gewaschen und getrocknet wird.

30 Teile dieser Dichlorsilicium-phthalocyanin-Verbindung werden in 440 Teile Chlorsulfonsäure eingetragen. Man führt die Umsetzung während etwa vier Stunden unter intensivem Rühren bei 130°C durch, kühlt den Ansatz sodann auf 85°C ab und gibt langsam während etwa 30 Minuten 180 Teile Thionylchlorid hinzu. Man führt die Umsetzung unter Rückfluß bei etwa 85°C für weitere vier Stunden durch, gibt den Ansatz sodann unter Rühren auf 3000 Teile Eis und filtriert das erhaltene Dichlorsilicium-phthalocyanintetrasulfochlorid der Formel 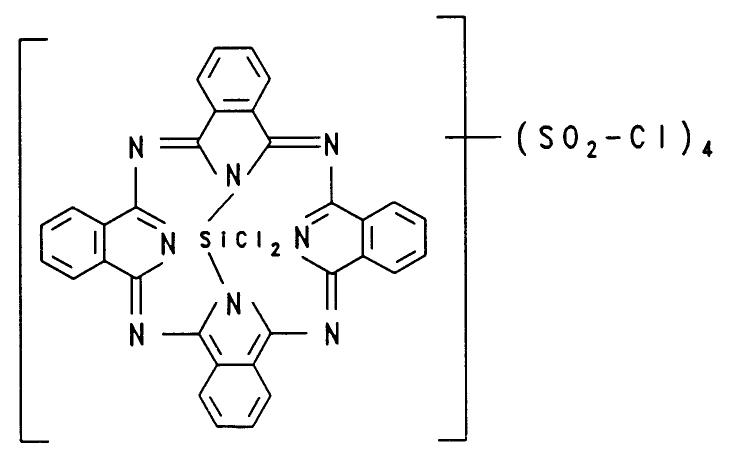 in Form eines feuchten Filterkuchens ab.

### Beispiel C

In ein Gemisch aus 35 Teilen Dichlorsilicium-phthalocyanin und 220 Teilen Tetrahydrofuran gibt man bei 20°C 29 Teile Methylmagnesiumbromid und führt die Umsetzung unter Rückflußtemperatur (ca. 67°C) während etwa 14 Stunden durch. Anschließend filtriert man ungelöste Bestandteile von dem abgekühlten Ansatz ab, versetzt das Filtrat mit 100 Teilen einer wäßrigen 5%igen Salzsäure, destilliert das Tetrahydrofuran ab und isoliert das erhaltene Dimethylsilicium-phthalocyanin durch Eindampfen der wäßrigen Phase.

18 Teile des Dimethylsilicium-phthalocyanins werden in 520 Teile Chlorsulfonsäure eingetragen. Man führt die Umsetzung während etwa drei Stunden bei 140°C unter gutem Rühren durch, kühlt den Ansatz auf 85°C ab und gibt langsam 100 Teile Thionylchlorid hinzu. Man führt die Umsetzung unter Rückflußtemperatur bei etwa 85°C zu Ende, gibt danach den Ansatz unter gutem Rühren auf 2000 Teile Eis und filtriert das ausgeschiedene Dimethylsilicium-phthalocyanin-tetrasulfochlorid der Formel 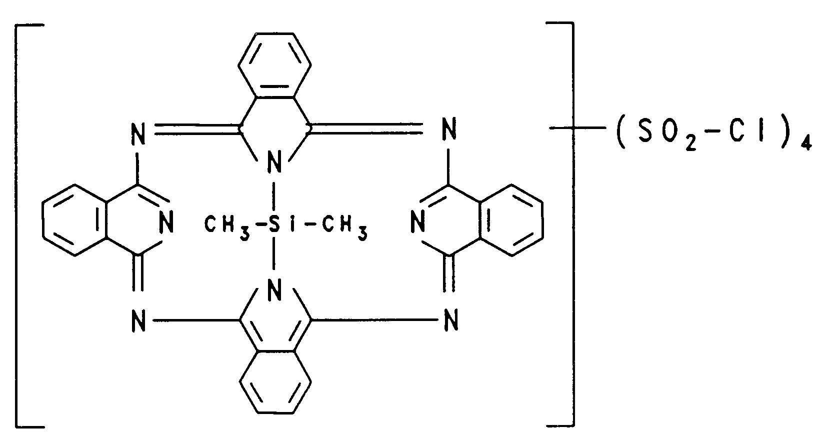 in Form eines feuchten Filterkuchens ab.

### Beispiel 1

Eine Lösung mit einem pH-Wert von 6,5 von 36 Teilen 4-(β-Sulfatoethylsulfonyl)-anilin in 100 Teilen Wasser werden unter Rühren mit dem als feuchter Filterkuchen isolierten Zink(II)-phthalocyanin-sulfochlorid von Beispiel A und 4 Teilen Nicotinsäureamid versetzt. Man rührt den Ansatz noch zwei Stunden bei 50°C und anschließend bei etwa 20°C unter Einhaltung des pH-Wertes von 6,5 nach. Nach Beendigung der Kondensationsreaktion wird der Ansatz filtriert und der erfindungsgemäße Phthalocyaninfarbstoff durch Aussalzen mittels Natriumchlorid oder durch Eindampfen der Reaktionslösung unter reduziertem Druck isoliert.

Der erfindungsgemäße Phthalocyaninfarbstoff besitzt, in Form der freien Säure geschrieben, die Formel

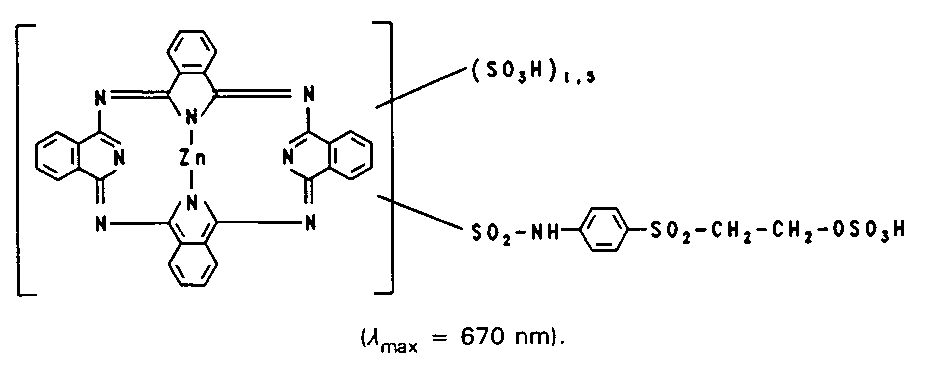

Er zeigt sehr gute faserreaktive Farbstoffeigenschaften, ist in Wasser sehr leicht löslich und liefert nach den in der Technik für faserreaktive Farbstoffe üblichen Applikations- und Fixierverfahren auf den in der Beschreibung genannten Materialien, wie insbesondere Cellulosefasermaterialien, wie Baumwolle, brillante, grüne Färbungen und Drucke mit guten Echtheitseigenschaften.

### Beispiel 2

Man verfährt zur Herstellung eines erfindungsgemäßen Phthalocyaninfarbstoffes gemäß den Angaben des Beispieles 1, setzt jedoch anstelle des 4-(β-Sulfatoethylsulfonyl)-anilins die gleiche Menge an 3-(β-Sulfatoethylsulfonyl)-anilin in den Reaktionsansatz ein.
Der erhaltene erfindungsgemäße Phthalocyaninfarbstoff der Formel (in Form der freien Säure geschrieben) 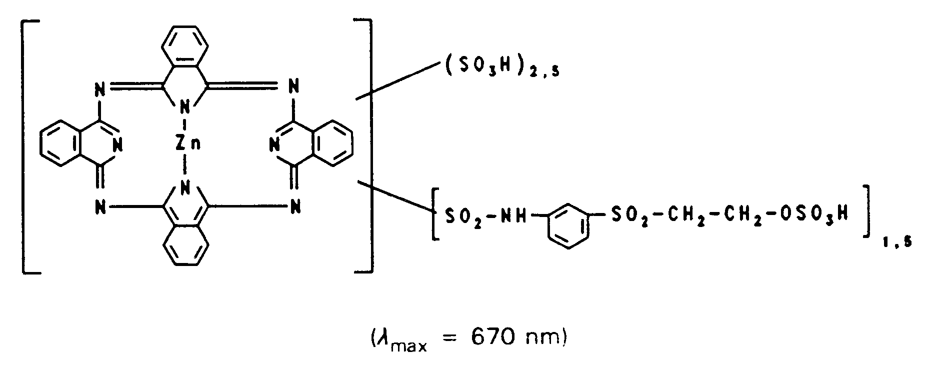 zeigt gute faserreaktive, anwendungstechnische Eigenschaften und färbt beispielsweise Cellulosefasermaterialien, wie Baumwolle, nach den in der Technik für faserreaktive Farbstoffe üblichen Färbe- und Druckverfahren in farbstarken, brillanten grünen Tönen mit guten Echtheitseigenschaften.

### Beispiel 3

Zu einer neutralen Lösung von 30 Teilen 4-(β-Sulfatoethylsulfonyl)-anilin in 300 Teilen Wasser gibt man unter gutem Rühren bei 35°C und einem pH-Wert zwischen 5,8 und 6,2 das gemäß Beispiel B in Form eines feuchten Filterkuchens erhaltene Dichlorsilicium-phthalocyanin-tetrasulfochlorid sowie 3 Teile Nicotinsäureamid. Man rührt den Ansatz unter den angegebenen Reaktionsbedingungen noch etwa drei Stunden weiter und isoliert sodann den erfindungsgemäßen Phthalocyaninfarbstoff der Formel (in Form der freien Säure geschrieben) 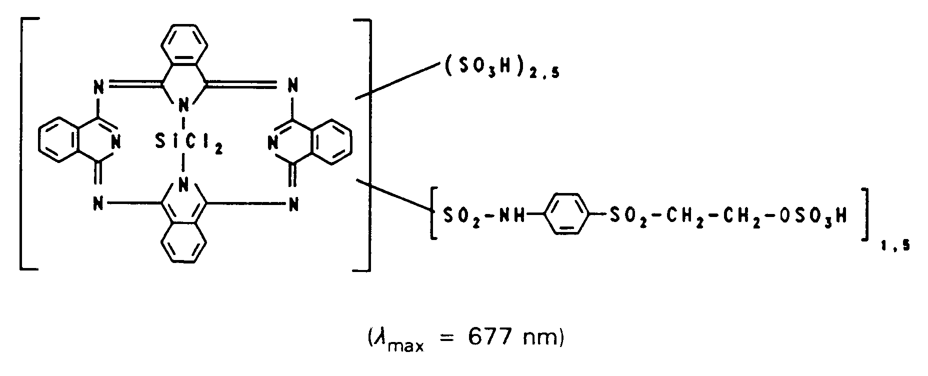 durch Eindampfen der wäßrigen Syntheselösung unter reduziertem Druck bei etwa 60°C.

Der erfindungsgemäße Farbstoff besitzt sehr gute faserreaktive Farbstoffeigenschaften und liefert auf den in der Beschreibung genannten Fasermaterialien, wie beispielsweise Baumwolle, nach den in der Technik für faserreaktive Farbstoffe üblichen Druck- und Färbeverfahren farbstarke, echte, grüne Drucke und Färbungen.

### Beispiel 4

Zu einer Lösung mit einem pH-Wert von 6 von 16,3 Teilen 4-(β-Sulfatoethylsulfonyl)-anilin in 200 Teilen Wasser gibt man bei einer Temperatur von 35°C und unter Einhaltung eines pH-Wertes zwischen 5,8 und 6,2 1,66 Teile Nicotinsäureamid und das gemäß Beispiel C als wasserfeuchten Filterkuchen erhaltene Dimethylsilicium-phthalocyanin-tetrasulfochlorid. Man rührt den Ansatz unter diesen Reaktionsbedingungen noch einige Zeit weiter und isoliert sodann den erhaltenen erfindungsgemäßen Phthalocyaninfarbstoff, der, in Form der freien Säure geschrieben, die Formel 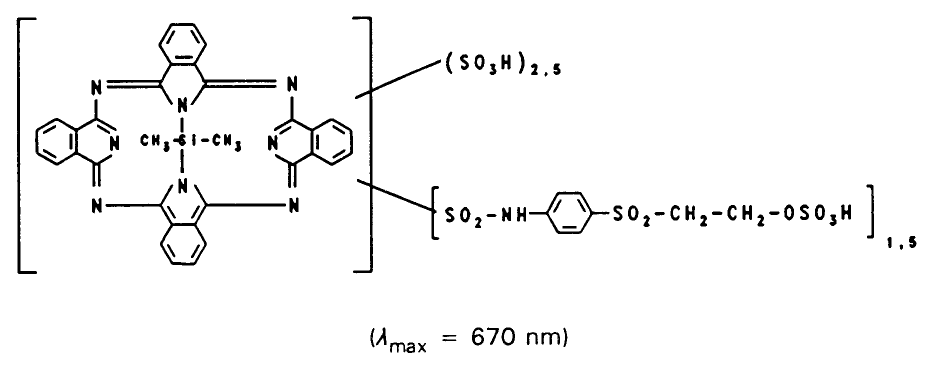 besitzt, durch Eindampfen der wäßrigen Syntheselösung unter reduziertem Druck bei etwa 60°C. Er besitzt sehr gute Farbstoffeigenschaften und liefert beispielsweise auf Cellulosefasermaterialien nach den in der Technik für faserreaktive Farbstoffe üblichen Anwendungsbedingungen farbstarke, echte Färbungen und Drucke in dunkelgrünen Tönen.

## Patentansprüche

1. Phthalocyaninfarbstoff der allgemeinen Formel (1) 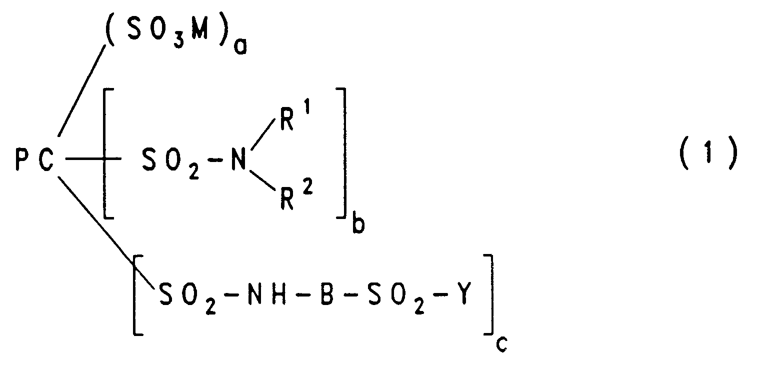 in welcher bedeuten:
PC ist der Rest des Phthalocyanins der allgemeinen Formel (A) 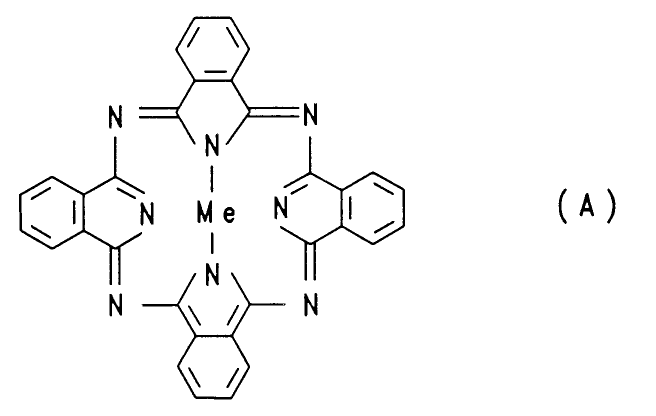 in welcher
Me der bivalente Metallrest
-Zn(II)-, 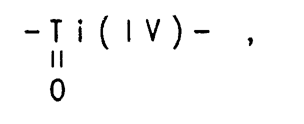 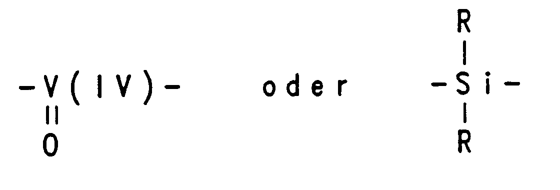 mit R gleich Methyl, Ethyl, Hydroxy oder Halogen, wie bevorzugt Chlor, ist;
M ist Wasserstoff oder ein Alkalimetall oder ein anderes salzbildendes Metall;
R¹ ist Wasserstoff, Alkyl von 1 bis 6 C-Atomen oder Alkyl von 2 bis 6 C-Atomen, das durch Alkoxy von 1 bis 4 C-Atomen, Cyano, Alkanoylamino von 2 bis 5 C-Atomen, Carboxy, Sulfo, Phosphato, Sulfato, Hydroxy oder Dialkylamino mit jeweils einem Alkyl von 1 bis 4 C-Atomen substituiert ist,
R² ist Wasserstoff, Alkyl von 1 bis 6 C-Atomen oder Alkyl von 2 bis 6 C-Atomen, das durch Alkoxy von 1 bis 4 C-Atomen, Cyano, Alkanoylamino von 2 bis 5 C-Atomen, Carboxy, Sulfo, Phosphato, Sulfato, Hydroxy, Phenyl, Sulfophenyl, Carboxyphenyl oder Dialkylamino mit jeweils einem Alkyl von 1 bis 4 C-Atomen substituiert ist, oder
R¹ und R² bilden gemeinsam mit dem Stickstoffatom und einem Alkylen von 3 bis 8 C-Atomen oder mit einer weiteren Heterogruppe und zwei Alkylenen von 1 bis 5 C-Atomen den Rest eines 4- bis 8-gliedrigen heterocyclischen Rings, oder
der Rest -NR¹R² ist Cyanoamino;
B ist ein Rest der allgemeinen Formel (2a) oder (2b) 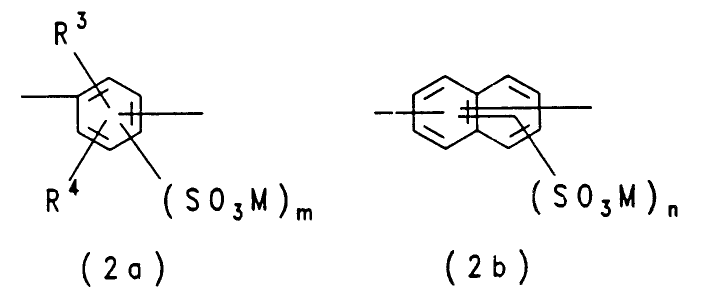 in welchen
R³ Wasserstoff, Alkyl von 1 bis 4 C-Atomen oder Alkoxy von 1 bis 4 C-Atomen ist,
R⁴ Wasserstoff, Halogen, Alkyl von 1 bis 4 C-Atomen oder Alkoxy von 1 bis 4 C-Atomen ist,
M die obengenannte Bedeutung besitzt,
m für Zahl Null oder 1 steht und
n die Zahl Null, 1 oder 2, bedeutet;
Y ist Vinyl oder ist Ethyl, das in β-Stellung einen Substituenten enthält, der durch Alkali unter Bildung der Vinylgruppe eliminierbar ist, oder Y ist β-Sulfoethyl oder β-Hydroxyethyl;
a ist eine Zahl von Null bis 3,
b ist eine Zahl von Null bis 2 und
c ist eine Zahl von 1 bis 4,
wobei die Summe von (a+b+c) gleich 1 bis 4 beträgt.

2. Phthalocyaninfarbstoff nach Anspruch 1, dadurch gekennzeichnet, daß B ein Rest der allgemeinen Formel (2a) ist, in welcher R³ Wasserstoff, Methyl oder Methoxy ist, R⁴ Wasserstoff oder Methoxy ist und m für die Zahl Null steht.

3. Phthalocyaninfarbstoff nach Anspruch 1 oder 2, dadurch gekennzeichnet, daß b die Zahl Null bedeutet.

4. Phthalocyaninfarbstoff nach Anspruch 3, dadurch gekennzeichnet, daß a eine Zahl von Null bis 3 und c eine Zahl von 1 bis 2 ist.

5. Phthalocyaninfarbstoff nach mindestens einem der Ansprüche 1 bis 4, dadurch gekennzeichnet, daß Y gleich β-Sulfatoethyl oder Vinyl ist.

6. Phthalocyaninfarbstoff nach mindestens einem der Ansprüche 1 bis 5, dadurch gekennzeichnet, daß Me Zink(II) ist.

7. Verfahren zur Herstellung eines Phthalocyaninfarbstoffes der allgemeinen Formel (1) von Anspruch 1, dadurch gekennzeichnet, daß man Phthalocyaninsulfonsäurechlorid der allgemeinen Formel (3) 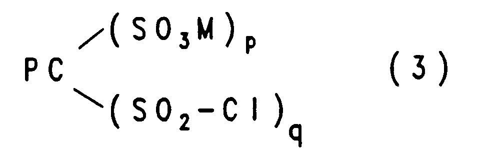 in welcher PC und M die in Anspruch 1 genannten Bedeutungen besitzen, p eine Zahl von Null bis 3 bedeutet und q eine Zahl von 1 bis 4 ist, wobei die Summe von (p + q) gleich 1 bis 4 ist, in wäßrigem oder nichtwäßrigem Medium mit einem Amin der allgemeinen Formel (4)
H₂N ― B ― SO₂ ― Y (4)
in welcher B und Y die in Anspruch 1 genannte Bedeutungen haben, und gegebenenfalls mit einem weiteren Amin der allgemeinen Formel H-NR¹ R² mit R¹ und R² der obengenannten Bedeutung gleichzeitig oder in beliebiger Reihenfolge und unter gleichzeitiger oder nachfolgender partieller Hydrolyse der Sulfochloridgruppen zu Sulfogruppen umsetzt, und gegebenenfalls im Falle von Y gleich β-Hydroxyethyl die β-Hydroxyethylsulfonyl-Gruppe in eine Gruppe der Formel -SO₂-Y, in welcher Y eine in β-Stellung durch eine Estergruppe substituierte Ethylgruppe ist, überführt.

8. Verwendung eines Phthalocyaninfarbstoffs von mindestens einem der Ansprüche 1 bis 6 oder eines nach Anspruch 7 hergestellten Phthalocyaninfarbstoffes zum Färben von hydroxy- und/oder carbonamidgruppenhaltigem Material, insbesondere Fasermaterial.

9. Verfahren zum Färben von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder durch beide Maßnahmen fixiert, dadurch gekennzeichnet, daß man als Farbstoff einen Phthalocyaninfarbstoff von mindestens einem der Ansprüche 1 bis 6 oder einen nach Anspruch 7 hergestellten Phthalocyaninfarbstoff in das Verfahren einsetzt.

## Claims

1. A phthalocyanine dye of the formula (1) 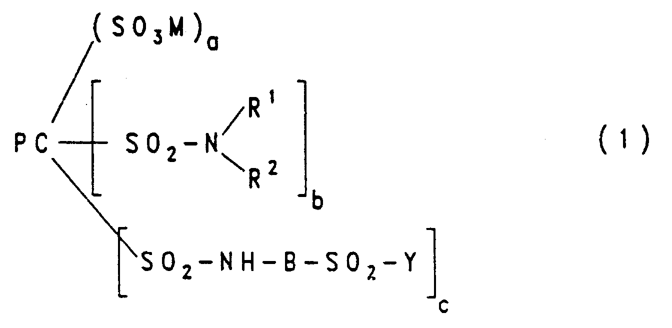 where
PC is the radical of the phthalocyanine of the formula (A) 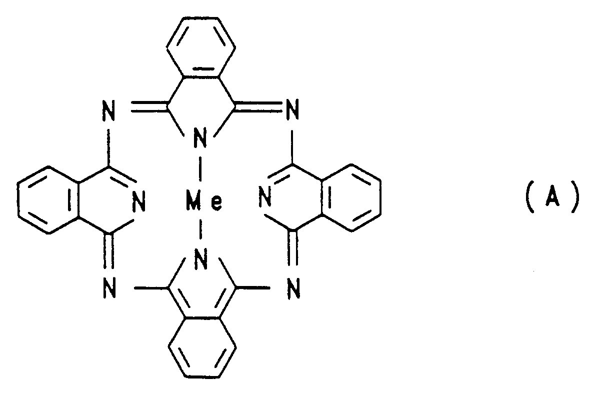 where
Me is the bivalent metal radical
-Zn(II)- , 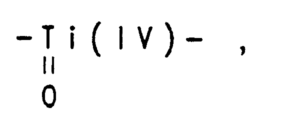 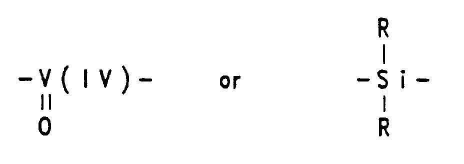 where R is methyl, ethyl, hydroxyl or halogen, preferably chlorine;
M is hydrogen or an alkali metal or some other salt-forming metal;
R¹ is hydrogen, alkyl of 1 to 6 carbon atoms, or is alkyl of 2 to 6 carbon atoms, which is substituted by alkoxy of 1 to 4 carbon atoms, cyano, alkanoylamino of 2 to 5 carbon atoms, carboxyl, sulfo, phosphato, sulfato, hydroxyl or dialkylamino having an alkyl each of 1 to 4 carbon atoms,
R² is hydrogen, alkyl of 1 to 6 carbon atoms, or is alkyl of 2 to 6 carbon atoms, which is substituted by alkoxy of 1 to 4 carbon atoms, cyano, alkanoylamino of 2 to 5 carbon atoms, carboxyl, sulfo, phosphato, sulfato, hydroxyl, phenyl, sulfophenyl, carboxyphenyl or dialkylamino having an alkyl each of 1 to 4 carbon atoms, or
R¹ and R², together with the nitrogen atom and an alkylene of 3 to 8 carbon atoms, or with a further hetero group and two alkylenes of 1 to 5 carbon atoms, form the radical of a 4- to 8-membered heterocyclic ring, or
the radical -NR¹R² is cyanoamino;
B is a radical of the formula (2a) or (2b) 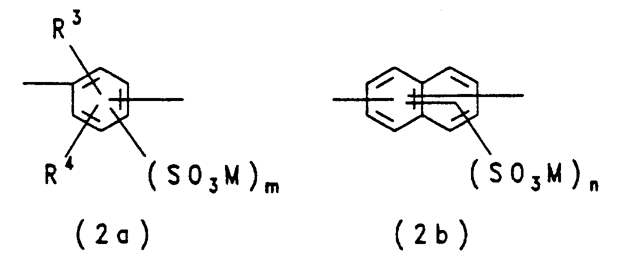 where
R³ is hydrogen, alkyl of 1 to 4 carbon atoms, or alkoxy of 1 to 4 carbon atoms,
R⁴ is hydrogen, halogen, alkyl of 1 to 4 carbon atoms, or alkoxy of 1 to 4 carbon atoms,
M is as defined above,
m is zero or 1, and
n is zero, 1 or 2;
Y is vinyl or is an ethyl group which, in the β-position, contains a substituent which is eliminable by alkali to leave a vinyl group, or Y is β-sulfoethyl or β-hydroxyethyl;
a is from zero to 3,
b is from zero to 2, and
c is from 1 to 4,
the sum of (a+b+c) being from 1 to 4.

2. A phthalocyanine dye as claimed in claim 1, wherein B is a radical of the formula (2a) where R³ is hydrogen, methyl or methoxy, R⁴ is hydrogen or methoxy, and m is zero.

3. A phthalocyanine dye as claimed in claim 1 or 2, wherein b is zero.

4. A phthalocyanine dye as claimed in claim 3, wherein a is from zero to 3 and c is from 1 to 2.

5. A phthalocyanine dye as claimed in at least one of claims 1 to 4, wherein Y is β-sulfatoethyl or vinyl.

6. A phthalocyanine dye as claimed in at least one of claims 1 to 5, wherein Me is zinc(II).

7. A process for preparing a phthalocyanine dye of the formula (1) of claim 1, which comprises reacting a phthalocyaninesulfonyl chloride of the formula (3) 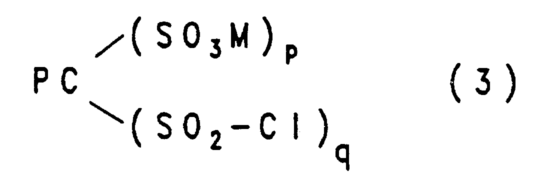 where PC and M are each as defined in claim 1, p is from zero to 3, and q is from 1 to 4, the sum of (p+q) being from 1 to 4, in an aqueous or non-aqueous medium with an amine of the formula (4)
H₂N―B―SO₂―Y (4)
where B and Y are each as defined in claim 1, and optionally with a further amine of the formula H-NR¹R² where R¹ and R² are each as defined above, concurrently or in any desired order and with concurrent or successive partial hydrolysis of the sulfonyl chloride groups to sulfo groups, and optionally in the case of Y being β-hydroxyethyl converting the β-hydroxyethylsulfonyl group into a group of the formula -SO₂-Y where Y is an ethyl group substituted in the β-position by an ester group.

8. The use of a phthalocyanine dye of at least one of claims 1 to 6 or of a phthalocyanine dye prepared as claimed in claim 7 for dyeing hydroxyl- and/or carboxamido-containing material, in particular fiber material.

9. A process for dyeing hydroxyl- and/or carboxamido-containing material, preferably fiber material, by applying a dye onto or into the material and fixing the dye on or in the material by means of heat or with the aid of an alkaline agent or by both measures, which comprises using a dye that is a phthalocyanine dye of at least one of claims 1 to 6 or a phthalocyanine dye prepared as claimed in claim 7.

## Revendications

1. Colorant phtalocyanine de formule générale (I) 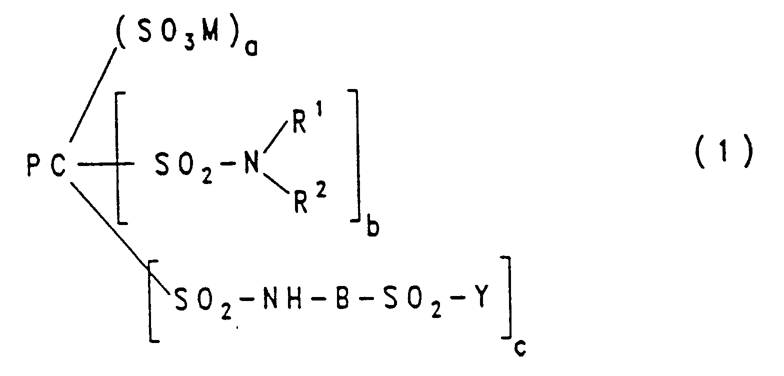 dans laquelle :
PC représente le radical de la phtalocyanine de formule générale (A) 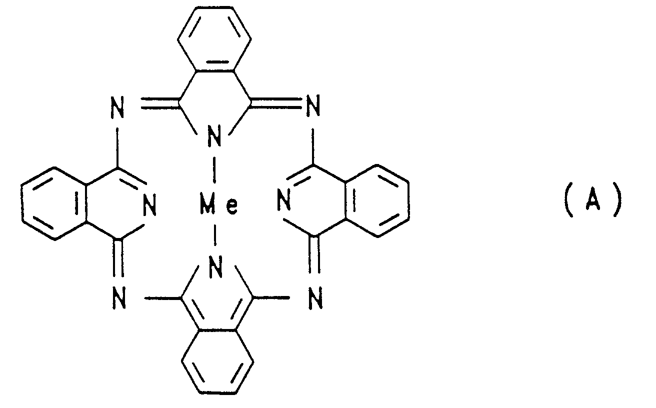 dans laquelle
Me représente le radical métallique bivalent
-Zn(II)-, 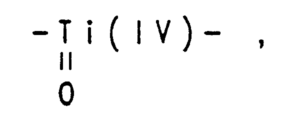 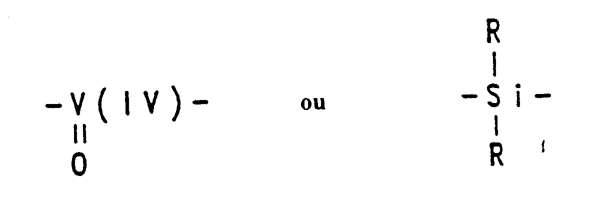 où R est un méthyle, un éthyle, un hydroxy ou un halogène, comme de préférence un chlore ;
M représente un hydrogène ou un métal alcalin ou un autre métal formant des sels ;
R¹ représente un hydrogène, un alkyle ayant de 1 à 6 atomes de carbone ou un alkyle ayant de 2 à 6 atomes de carbone, qui est substitué par un alcoxy ayant de 1 à 4 atomes de carbone, un cyano, un alcanoylamino ayant de 2 à 5 atomes de carbone, un carboxy, un sulfo, un phosphato, un sulfato, un hydroxy ou un dialkylamino avec dans chaque cas un alkyle ayant de 1 à 4 atomes de carbone,
R² représente un hydrogène, un alkyle ayant de 1 à 6 atomes de carbone ou un alkyle ayant de 2 à 6 atomes de carbone, qui est substitué par un alcoxy ayant de 1 à 4 atomes de carbone, un cyano, un alcanoylamino ayant de 2 à 5 atomes de carbone, un carboxy, un sulfo, un phosphato, un sulfato, un hydroxy, un phényle, un sulfophényle, un carboxyphényle ou un dialkylamino avec dans chaque cas un alkyle ayant de 1 à 4 atomes de carbone, ou
R¹ et R² forment, conjointement avec l'atome d'azote et un alkylène ayant de 3 à 8 atomes de carbone ou avec un autre groupe hétéro et deux alkylènes ayant de 1 à 5 atomes de carbone, le radical d'un noyau hétérocyclique à 4 à 8 chaînons, ou le radical -NR¹R² est un cyanoamino ;
B représente un radical de formules générales (2a) ou (2b) 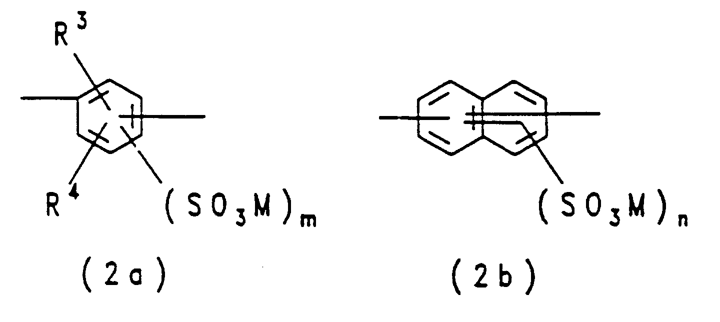 dans lesquelles
R³ représente un hydrogène, un alkyle ayant de 1 à 4 atomes de carbone ou un alcoxy ayant de 1 à 4 atomes de carbone,
R⁴ représente un hydrogène, un halogène, un alkyle ayant de 1 à 4 atomes de carbone ou un alcoxy ayant de 1 à 4 atomes de carbone,
M est tel que défini ci-dessus,
m représente le nombre zéro ou 1 et
n représente le nombre zéro, 1 ou 2 ;
Y représente un vinyle ou un éthyle, qui renferme un substituant en position β pouvant être éliminé par un alcali en formant le groupe vinyle, ou Y est un β-sulfoéthyle ou un β-hydroxyéthyle ;
a représente un nombre de zéro à 3,
b représente un nombre de zéro à 2, et
c représente un nombre de 1 à 4,
la somme de (a+b+c) valant de 1 à 4.

2. Colorant phtalocyanine selon la revendication 1, caractérisé en ce que B représente un radical de formule générale (2a), dans laquelle R³ est un hydrogène, un méthyle ou un méthoxy, R⁴ est un hydrogène ou un méthoxy et m représente le nombre zéro.

3. Colorant phtalocyanine selon la revendication 1 ou 2, caractérisé en ce que b représente le nombre zéro.

4. Colorant phtalocyanine selon la revendication 3, caractérisé en ce que a est un nombre de zéro à 3 et c est un nombre de 1 à 2.

5. Colorant phtalocyanine selon au moins l'une des revendications 1 à 4, caractérisé en ce que Y est un β-sulfatoéthyle ou un vinyle.

6. Colorant phtalocyanine selon au moins l'une des revendications 1 à 5, caractérisé en ce que Me est le zinc (II).

7. Procédé de préparation d'un colorant phtalocyanine de formule générale (1) selon la revendication 1, caractérisé en ce que l'on fait réagir du chlorure d'acide phtalocyanine sulfonique de formule générale (3) 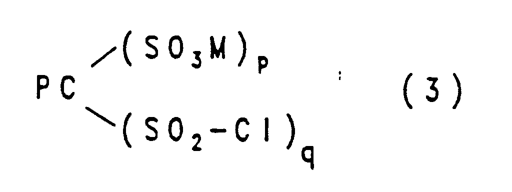 dans laquelle PC et M sont tels que définis à la revendication 1, p représente un nombre de zéro à 3 et q représente un nombre de 1 à 4, la somme de (p+q) valant de 1 à 4, en milieu aqueux ou non aqueux, avec une amine de formule générale (4)
H₂N ― B ― SO₂ ― Y (4)
dans laquelle B et Y sont tels que définis à la revendication 1, et éventuellement avec une autre amine de formule générale H-NR¹R², dans laquelle R¹ et R² sont tels que définis ci-dessus, simultanément ou dans un ordre quelconque, et par hydrolyse partielle simultanée ou consécutive des groupes sulfochlorure en groupes sulfo, et éventuellement dans le cas où Y est un β-hydroxyéthyle, on transforme le groupe β-hydroxyéthylsulfonyle en un groupe de formule - SO₂-Y, dans laquelle Y est un groupe éthyle substitué par un groupe ester en position β.

8. Utilisation d'un colorant phtalocyanine selon au moins l'une des revendications 1 à 6 ou d'un colorant phtalocyanine préparé selon la revendication 7 pour la teinture d'une matière renfermant des groupes hydroxy et/ou carbonamide, en particulier d'une matière fibreuse.

9. Procédé de teinture d'une matière renfermant des groupes hydroxy et/ou carbonamide, de préférence d'une matière fibreuse, dans lequel on applique un colorant sur la matière ou on l'incorpore dans la matière, et on fixe le colorant sur ou dans la matière par la chaleur ou à l'aide d'un agent alcalin ou par les deux mesures, caractérisé en ce que l'on utilise dans le procédé, en tant que colorant, un colorant phtalocyanine selon au moins l'une des revendications 1 à 6 ou un colorant phtalocyanine préparé selon la revendication 7.
